# EUROPEAN PATENT SPECIFICATION

(11) **EP 1 930 205 B1**
(45) Date of publication and mention of the grant of the patent: **20.07.2011**
(21) Application number: 08075202.5
(22) Date of filing: 10.05.2004
(51) Int. Cl.: B60N 2/28

(54) **Infant vehicle seat**
Kindersitz für Fahrzeuge
Siège d'enfants pour véhicules

(30) Priority: 14.05.2003 NL 1023422
(43) Date of publication of application: 11.06.2008
(62) Divisional of application: 04076380.7
(73) Proprietor: Maxi Miliaan B.V., 5704 RD Helmond (NL)
(72) Inventor: Siewertsen, Adriaan, 5961 MD Son en Breugel (NL); Van Geer, Rene Johan, 2281 AJ Rijswijk (NL)
(74) Representative: Veldman-Dijkers, Cornelia G. C.

(56) References cited:
- EP-A- 0 714 806
- DE-A1- 10 003 514
- GB-A- 2 349 813

## Description

The invention relates to an infant vehicle seat comprising a frame as well as connectors connected to the frame which, in use, can be detachably connected to mounting elements present in a vehicle.

With such an infant vehicle seat, which is known from European patent application EP-A1-1 180 448 , the frame is connected to two mounting elements present in the vehicle by means of the two connectors. The mounting elements are brackets, for example, which are connected to the chassis of the vehicle. The mounting elements are disposed between the back portion and the seat portion of the vehicle seat to which the infant vehicle seat is mounted.

With such an infant vehicle seat it is not ensured that both of the connectors are being connected to the mounting elements present in the vehicle.

DE 100 03 514 shows an infant vehicle seat with the features of the preamble of claim 1.

It is an object of the invention to make it possible in a simple manner to ensure that all connectors are locked in position.

This object is being achieved by the infant vehicle seat according to claim 1.

Since the first rod is only movable if both connectors are connected to the mounting elements, the operating knob of the first rod indicates in a simple manner to a user that both connectors are well connected.

By pushing against the first rod against the spring force of the spring in a direction towards the connectors, the levers are being pivoted due to which the draw links are being pulled at so that both connectors are simultaneously being unlocked.

An embodiment of the infant vehicle seat according to the invention is characterized in that the operating knob is slidable in a direction out of the second rod over a warning knob if both levers are in the second position and both connectors are connected to the mounting elements.

Preferably the operating knob is green whilst the warning knob is red so that it is clearly visible to a user if the connectors are correctly in engagement with the mounting elements when the operating knob has been slid over the warning knob. If the warning knob is still fully visible, this will indicate to a user that the connectors are not yet all in engagement with the mounting elements.

The invention will be explained in more detail with reference to the drawing, in which:
Fig. 1 is a perspective view of an infant vehicle seat according to the invention, in which a support leg and connectors are in the storage position;
Fig. 2 is a perspective view of the infant vehicle seat that is shown in fig. 1, in which the support leg is in the supporting position and the connectors are in the mounting position;
Figs. 3-6 show different situations of the connecting and disconnecting of the connectors, wherein the situation of the connectors can be indicated by means of a marking element according to the invention.

In the figures, like parts are indicated by the same numerals.

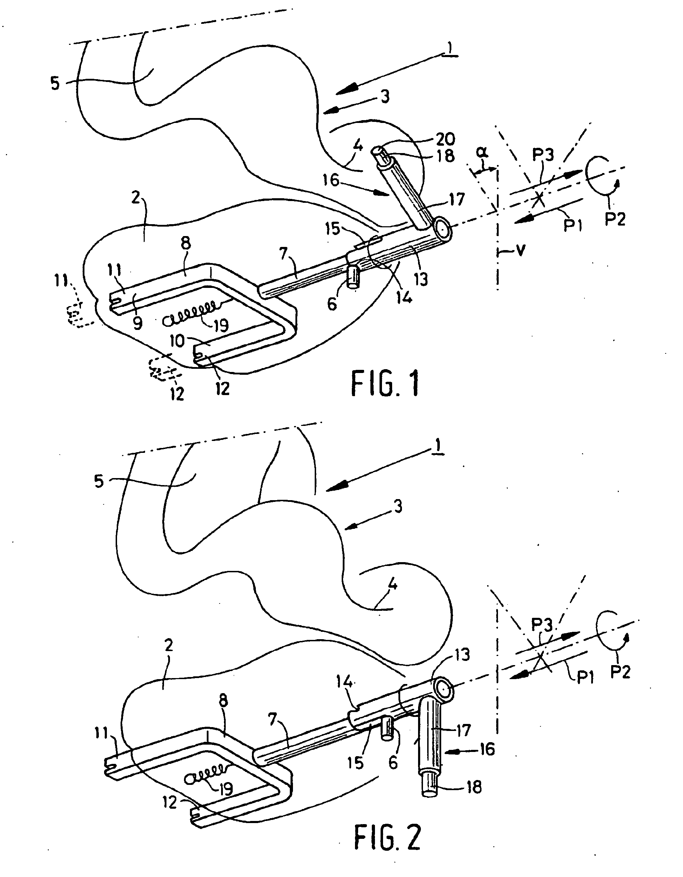

Figs. 1 and 2 are perspective views of an infant vehicle seat 1 according to the invention, which comprises a frame 2 and a seat 3 connected to the frame 2. The seat 3 comprises a seat portion 4 and a back portion 5. The seat 3 is known per se and is only schematically indicated, therefore. On a side remote from the seat 3, the frame 2 is provided with a substantially vertically extending pin 6, which is rigidly connected to the frame 2. The pin 6 extends through a slot formed in a rod 7, as a result of which the rod 7 is movable in the direction indicated by the arrow P1 and in the opposite direction with respect to the pin 6. The rod 7 is provided with a U-shaped bracket 8 on a side remote from the pin 6, which bracket is provided with connectors 11, 12 at ends 9, 10 remote from the rod 7. The connectors 11, 12 are known per se, for example from European patent application EP-A1-1,180,448, being referred to as isofix connectors, for example, in the industry.

On a side remote from the U-shaped bracket 8, the rod 7 is provided with a sleeve 13, which sleeve is pivotable about the rod 7 in the direction indicated by the arrow P2 and in the opposite direction. The sleeve 13 is provided with two slots 14, 15 of different length, which extend parallel to the longitudinal direction of the rod 7. On a side remote from the slots 14, 15, the sleeve 13 is provided with a support leg 16 extending transversely to the sleeve 13. The support leg 16 comprises a number of tubes 17, 18, which can telescope with respect to each other.

In the position of the support leg 16 that is shown in Fig. 1, said support leg 16 is disposed on the same side of the frame 2 as the back portion 5. The support leg 16 includes an angle α with the vertical V of 30°. In this position of the support leg 16, the relatively short slot 14 of the sleeve 13 surrounds the pin 6 that is rigidly connected to the frame 2. The rod 7 and the sleeve 13 connected thereto are pulled in the direction indicated by the arrow P1 by means of a spring 19 connected to the frame 2, as a result of which the slot 14 firmly surrounds the pin 6. The rod 7 connected to the sleeve 13 and the connectors 11, 12 connected to the rod 7 via the U-shaped bracket 8 are positioned under the frame 2 in such a manner that the connectors 11, 12 cannot be connected to mounting elements (not shown) present in a vehicle. Said mounting elements, which are to be connected to the connectors, are known per se and will not be discussed in more detail herein, therefore. In the storage position of the support leg 16 that is shown in Fig. 1, the telescopic tubes 17, 18 have been telescoped, so that the support leg 16 is relatively short.

If a user wishes to mount the infant vehicle seat 1 in a vehicle, the infant vehicle seat 1 is positioned on a seat of the vehicle. Subsequently, the support leg 16 is jointly moved with the sleeve 13 connected thereto in a direction indicated by the arrow P3, opposite the direction indicated by the arrow P1, against the spring force of the spring 19 until the slot 14 no longer surrounds the pin 6. Also the rod 7 and the U-shaped bracket 8 connected thereto and the connectors 11, 12 connected to said bracket undergo the same movement in the direction indicated by the arrow P3. Subsequently, the support leg 16 and the sleeve 13 are jointly pivoted about the rod 7 in the direction indicated by the arrow P2, until the slot 15 is positioned opposite the pin 6. Following that, the support leg 16, the sleeve 13, the rod 7, the U-shaped bracket 8 and the connectors 11, 12 connected thereto are moved in the direction indicated by the arrow P1 partially under the influence of the force exerted by the spring 19, until the pin 6 abuts against one end of the slot 15. The support leg 16 is now in the position that is shown in Fig. 2, whilst the connectors 11, 12 are in a mounting position. In Fig. 1, said mounting position is illustrated in dotted lines. The length of the support leg 16 must now be adjusted to such an extent that an end 20 of the tube 18 remote from the sleeve 13 is firmly supported on a floor of the vehicle. This will be done practically automatically by a user who has taken hold of the support leg 16. It is possible, if desired, for the tube 18 to slide out of the tube 17 automatically under the influence of the force of gravity, in which case a known ratchet mechanism prevents the tube 18 from sliding into the tube 17 again. The tube 18 can only be slid into the tube 17, for example with a view to subsequently moving the support leg to the storage position that is shown in Fig. 1, by unlocking the ratchet mechanism.

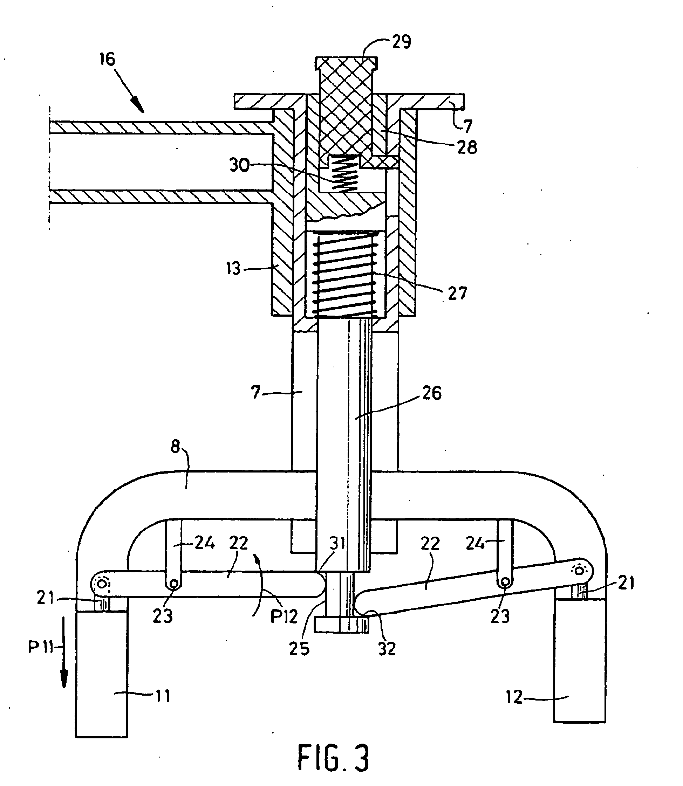

The operation of the connectors 11, 12 connected to the ends of the U-shaped bracket 8 is shown more clearly in Fig. 3. Each connector 11, 12 is provided with a draw link 21 extending parallel to the rod 7, which draw link 21 is pivotally connected to a lever 22 on a side remote from the connector 11, 12. The lever 22 is pivot-mounted to an arm 24 connected to the U-shaped bracket 8 by means of a pivot pin 23. An end of the lever 22 remote from the draw link 21 is supported in an elongated recess 25 of a rod 26 which is slidably accommodated in the rod 7. The rod 26 is provided with a spring 27 at an end remote from the recess 25, by means of which spring an operating knob 28 connected to the rod 26 is pressed in a direction out of the rod 7. Disposed within the operating knob 28 is a warning knob 29, which is pressed in a direction away from the rod 26 by means of a spring 30. The warning knob 29 preferably has a colour such as red, which functions to warn the user that not all the connectors 11, 12 have been moved to a locking position yet. The operating knob 28 preferably has a colour such as green, which indicates to the user that the connectors 11, 12 are in engagement with the mounting elements. The knob is 28, 29 serve as marking elements. The operation of the mechanism as shown in Fig. 3 will now be explained in more detail with reference to Figs. 3-6.

In the position that is shown in Fig. 3, the connector 11 takes up a position in which it is in engagement with the mounting element. In this position, the draw link 21 has been pulled into the connector 11 in the direction indicated by the arrow P11, causing the lever 22 to pivot about the pivot pin 23 in the direction indicated by the arrow P12, to a position in which it abuts against an end 31 of the recess 25 with one end.

The other connector 12 is not in engagement with the mounting element yet, so that the draw link 21 has not been moved into the connector 12 in the direction indicated by the arrow P11 yet. The lever 22 remains in the tilted position as shown in Fig. 3, in which an end of the lever 22 remote from the draw link 21 abuts against an end 32 of the recess 25 remote from the end 31. The warning knob 29 extends beyond an end of the rod 7, so that the red warning knob 29 is clearly visible to mark the fact that the connectors are not both in engagement with mounting elements yet.

For the sake of completeness it is noted with regard to Fig. 3 that the support leg 16 extends transversely to the plane of the drawing at the moment when the connectors 11, 12 can be moved into engagement with the connecting elements. For the sake of clarity as regards the position of the supporting leg 16, the support leg is shown in the plane of the drawing, however.

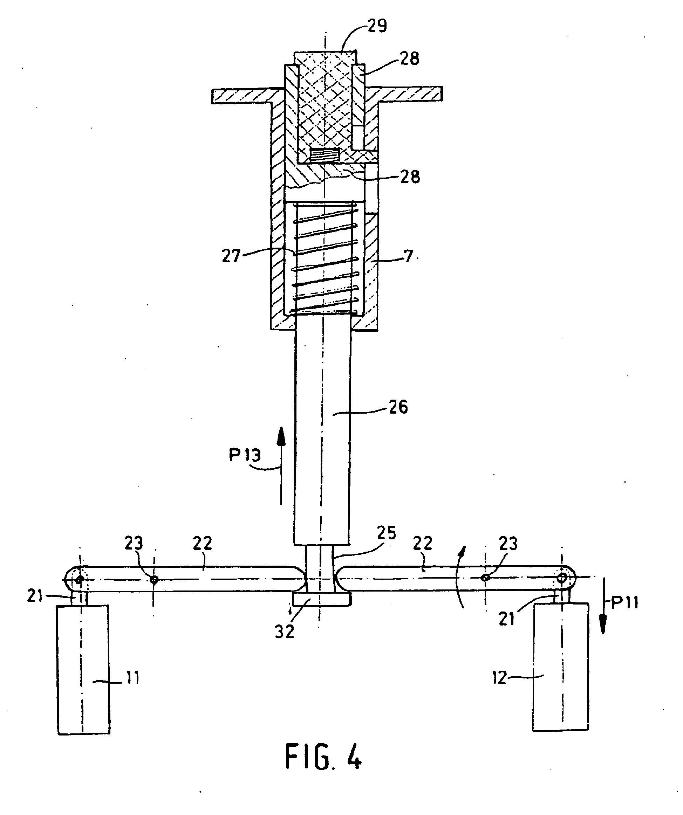

Fig. 4 schematically shows a situation in which both connectors 11, 12 have been moved into engagement with mounting elements, as a result of which the two draw links 21 have moved into the connectors 11, 12 in the direction indicated by the arrow P11 and the two levers 22 have pivoted about the pivot pins 23 to the position that is shown in Fig. 4. As soon as the two levers take up the position that is shown in Fig. 4, the rod 26 is moved jointly with the operating knob 28 in the direction indicated by the arrow P13 with respect to the rod 7 under the influence of the spring 27, until the ends of the levers 22 abut against the end 32 of the recess 25. The green operating knob 28 is slid over the red warning knob 29, so that it is mainly the green operating knob 28 that is visible, which indicates to a user that both of the connectors 11, 12 are correctly in engagement with the mounting elements.

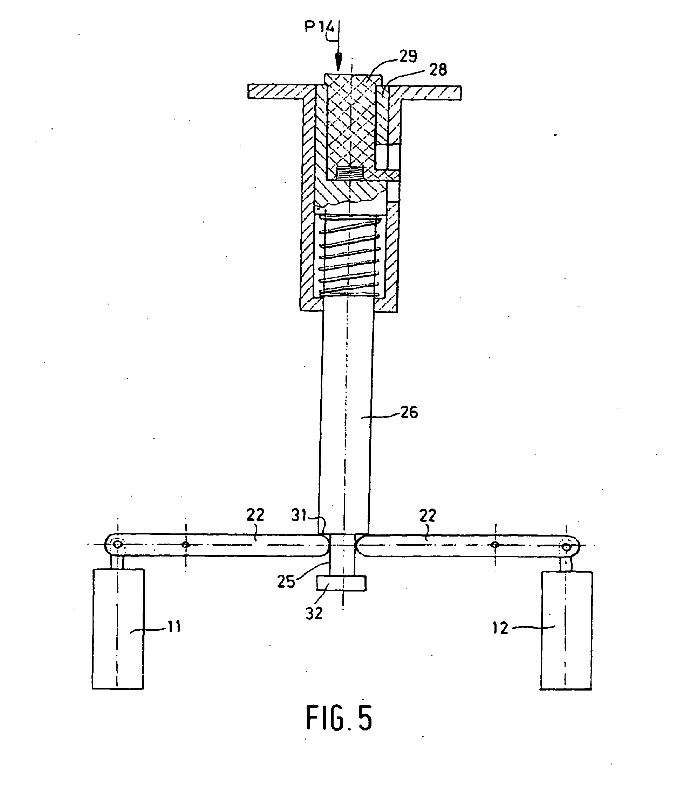

Fig. 5 shows a situation in which a user bumps against a warning knob 29, by accident, for example, thereby pressing the warning knob into the rod 7 over a relatively short distance. As Fig. 5 shows, the warning knob 29 will be moved jointly with the operating knob 28 and the rod 26 in indicated by the arrow P14, opposite to the direction indicated by the arrow P13, whereupon the ends of the levers 22 come into contact with an end 31 of the recess 25.

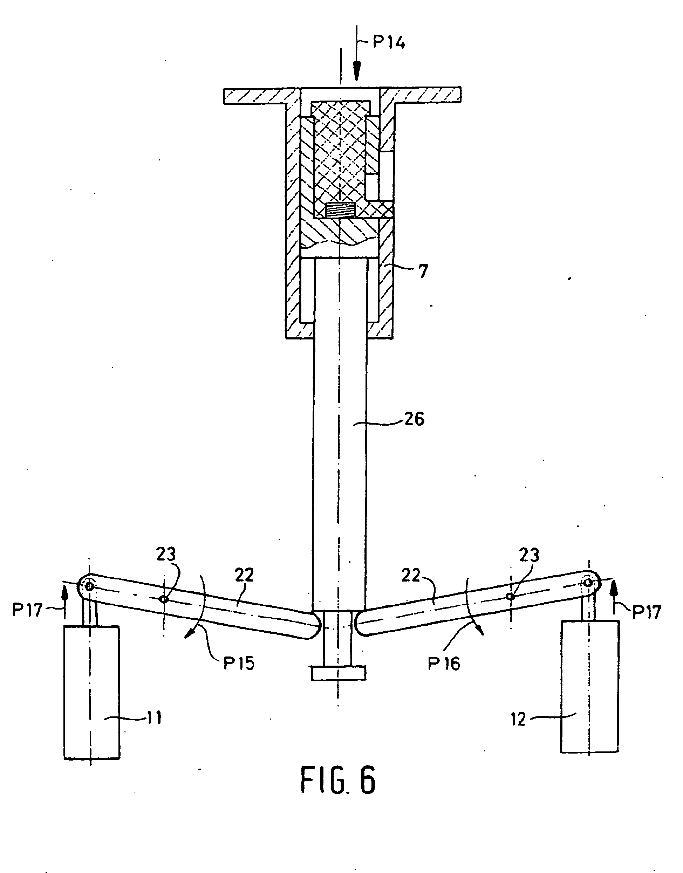

The levers 22 will not be pivoted about the pivot pins 23 in the directions indicated by the arrows P15 and P16, respectively, until the moment the warning knob 29 and the operating knob 28 are jointly pressed further in the direction indicated by the arrow P14 (as shown in Fig. 6) and into the rod 7, as a result of which pivoting the draw links 21 will move out of the connectors 11, 12 in the direction indicated by the arrow P17 and the connectors 11, 12 are jointly unlocked.

The mechanism shown in Figs. 3-6 thus makes it possible in a simple manner to ensure that both of the connectors 11, 12 are locked in position, whilst in addition the unlocking of the two connectors 11, 12 can be realised by operating a single knob.

If the sleeve 13 is provided with a further slot 14, it is possible to have the support leg 16 pivot to a right-hand side of the infant seat 1 instead of to the left-hand side thereof.

Instead of using a single support leg 16, it is also possible to provide the U-shaped bracket 8 with two rods 7 extending parallel to each other, in which case a support leg 16 is attached to each rod 7 in the manner as indicated above.

It is also possible to tilt the support leg 16 to a position under the frame 2, with the tilting movement of the support leg 16 to the storage position resulting in simultaneous movement of the connectors 11, 12 from the mounting position as shown in Fig. 2 to the storage position as shown in Fig. 1.

It is also possible to connect the support leg removably to the frame 2, in which case the connectors 11, 12 are moved against spring force from a storage position to a mounting position upon connection of the support leg to the frame 2, whilst the connectors 11, 12 are automatically moved to a storage position under the influence of spring force upon removal of the support leg 16.

It is also possible to have the support leg 16 rest on a front side of the vehicle seat instead of on a floor of the vehicle.

It is also possible to connect the seat to the frame in such a manner that the back portion is positioned near the support leg, in which case the infant present in the seat faces the rear while being transported.

## Claims

1. An infant vehicle seat (3) comprising a frame (2) as well as two connectors (11, 12) connected to the frame (2) which, in use, can be detachably connected to mounting elements present in a vehicle, **characterized in that**
- each connector (11, 12) is provided with a draw link (21) pivotably connected to a lever (22) on a side remote from the connector (11,12),
- ends of the levers (22) remote from the draw links (21) to which they are connected, are supported in an elongated recess (25) of a first rod (26),
- which first rod (26) is slidably movable in a second rod (7) extending parallel to the draw links (21),
- which first rod (26) is provided with a spring (27) by means of which spring (27) an operating knob (28) connected to the first rod (26) is pressed in a direction out of the second rod (7),
- wherein there is at least a first situation in which both connectors (11,12) have been moved into engagement with the mounting elements, as a result of which the two draw links (21) have moved into the connectors (11, 12) and the two levers (22) have pivoted to a first position and as soon as the two levers take up this first position, the rod (26) is moved jointly with the operating knob (28) with respect to the rod (7) under the influence of the spring (27), until the ends of the levers (22) abut against a first end (32) of the recess (25) and
- wherein there is at least a second situation in which one of the connectors (11,12) takes up a position in which it is in engagement with the mounting element, wherein the draw link (21) has been pulled into the connector (11, 12), causing the lever (22) to pivot to a position in which it abuts against a second end (31) of the recess (25) with one end, whilst the other of the connectors (11, 12) is not in engagement with the mounting element, so that the draw link (21) has not been moved into the connector (11, 12) and wherein the lever (22) remains in a tilted position in which an end of the lever (22) remote from the draw link (21) abuts against first end (32) of the recess (25) remote from the second end (31).

2. An infant vehicle seat (3) according to claim 1, **characterized in that** the operating knob (28) is slidable in a direction out of the second rod (7) over a warning knob (29) if both levers (22) are in the second position and both connectors (11, 12) are connected to the mounting elements.

3. An infant vehicle seat (3) according to claim 2, **characterized in that** the operating knob (28) and the warning knob (29) are jointly slidable in a direction into the second rod (7) to pivot the levers (22) from the second position to the first position to jointly unlock the connectors (11, 12).

## Patentansprüche

1. Kindersitz (3) für Fahrzeuge umfassend einen Rahmen (2) sowie zwei mit dem Rahmen (2) verbundenen Verbindungsteilen (11, 12), welche in Einbaulage lösbar an den in einem Fahrzeug vorhandenen Anbringungselementen befestigbar sind, **dadurch gekennzeichnet dass**
- jedes Verbindungsteil (11, 12) ein Zugglied (21) aufweist, welches an einer dem Verbindungsteil (11, 12) entfernten Seite schwenkbar an einem Hebel (22) befestigt ist,
- Enden des Hebels (22), entfernt von den Zuggliedern (21) an denen diese befestigt sind, in einer länglichen Ausnehmung (25) eines ersten Rohres (26) geführt sind,
- dieses erste Rohr (26) verschiebbar beweglich in einem sich parallel zu den Zuggliedern (21) erstreckenden zweiten Rohr (7) angeordnet ist,
- dieses erste Rohr (26) eine Feder (27) aufweist, mittels welcher ein an dem ersten Rohr (26) befestigter Schaltknopf (28) in eine Richtung hinaus aus dem zweiten Rohr (7) gedrückt wird,
- wobei zumindest eine erste Stellung existiert, gemäß welcher beide Verbindungsteile (11, 12) zum Eingriff mit dem Anbringungselementen bewegt worden sind, wodurch die beiden Zugglieder (21) in die Verbindungsteile (11, 12) hinein bewegt sind und die zwei Hebel (22) in eine erste Position beschwenkt sind und sobald die zwei Hebel die erste Position einnehmen, das Rohr (26) zusammen mit dem Schaltknopf (28) unter dem Einfluss der Feder (27) in Bezug zu dem Rohr (7) bewegt wird, bis die Enden der Hebel (22) gegen ein erstes Ende (32) der Ausnehmung (25) stoßen, und
- wobei zumindest eine zweite Stellung existiert, gemäß welcher eines der Verbindungsteile (11, 12) eine Position einnimmt, in welcher dieses im Eingriff mit dem Anbringungselement ist, dass das Zugglied (21) dabei in das Verbindungsteil (11, 12) hinein gezogen ist, so dass der Hebel (22) in eine Position schwenkt, in welcher dieser gegen ein zweites Ende (31) der Ausnehmung (25) mit einem Ende anstößt, während das andere Verbindungsteil (11, 12) nicht im Eingriff mit dem Anbringungselement ist, sodass das Zugglied (21) nicht in das Verbindungsteil (11, 12) hineinbewegt wurde und wobei der Hebel (22) in einer geneigten Stellung verharrt, in welcher ein von dem Zugglied (21) entferntes Ende des Hebels (22) gegen ein erstes von dem zweiten Ende (31) der Ausnehmung (25) entferntes Ende (32) stößt.

2. Kindersitz (3) für Fahrzeuge nach Anspruch 1, **dadurch gekennzeichnet dass** der Schaltknopf (28) in eine Richtung über das zweite Rohr (7) hinaus über einen Warnknopf (29) schiebbar ist, falls beide Hebel (22) in der zweiten Stellung sind und falls beide Verbindungsteile (11, 12) an den Anbringungselementen befestigt sind.

3. Kindersitz (3) für Fahrzeuge nach Anspruch 2, **dadurch gekennzeichnet dass** der Schaltknopf (28) und der Warnknopf (29) zusammen in eine Richtung in das zweite Rohr (7) hinein verschieblich sind, um die Hebel (22) von der zweiten Stellung zu der ersten Stellung zu schwenken, um zusammen die Verbindungsteile (11, 12) zu entriegeln.

## Revendications

1. Siège d'enfant pour véhicule (3) comprenant un châssis (2) ainsi que deux connecteurs (11, 12) connectés au châssis (2) qui, en service, peuvent être connectés de manière amovible à des éléments de montage présents dans un véhicule, **caractérisé en ce que**
- chaque connecteur (11, 12) est muni d'une liaison de traction (21) reliée de manière pivotante à un levier (22) sur un côté éloigné du connecteur (11, 12),
- des extrémités des leviers (22), éloignées des liaisons de traction (21) auxquelles elles sont reliées, sont supportées dans un évidement allongé (25) d'une première tige (26),
- laquelle première tige (26) peut coulisser dans une seconde tige (7) s'étendant parallèlement aux liaisons de traction (21),
- laquelle première tige (26) est munie d'un ressort (27), ressort (27) au moyen duquel un bouton d'actionnement (28) connecté à la première tige (26) est pressé dans une direction s'éloignant de la seconde tige (7),
- dans lequel il existe au moins une première situation dans laquelle les deux connecteurs (11, 12) ont été déplacés en prise avec les éléments de montage, avec pour conséquence que les deux liaisons de traction (21) se sont déplacées dans les connecteurs (11, 12) et les deux leviers (22) ont pivoté dans une première position et, dès que les deux leviers sont dans cette première position, la tige (26) est déplacée conjointement au bouton d'actionnement (28) par rapport à la tige (7) sous l'action du ressort (27), jusqu'à ce que les extrémités des leviers (22) soient en butée contre une première extrémité (32) de l'évidement (25) et
- dans lequel il existe au moins une seconde situation dans laquelle un des connecteurs (11, 12) est dans une position dans laquelle il est en prise avec l'élément de montage, dans laquelle la liaison de traction (21) a été tirée dans le connecteur (11, 12), forçant le levier (22) à pivoter dans une position dans laquelle il est en butée contre une seconde extrémité (31) de l'évidement (25) avec une extrémité, alors que l'autre des connecteurs (11, 12) n'est pas en prise avec l'élément de montage, de sorte que la liaison de traction (21) n'a pas été déplacée dans le connecteur (11, 12), et où le levier (22) reste dans une position inclinée dans laquelle une extrémité du levier (22) éloignée de la liaison de traction (21) est en butée contre la première extrémité (32) de l'évidement (25) éloignée de la seconde extrémité (31).

2. Siège d'enfant pour véhicule (3) selon la revendication 1, **caractérisé en ce que** le bouton d'actionnement (28) peut coulisser dans une direction s'éloignant de la seconde tige (7) sur un bouton d'alerte (29) si les deux leviers (22) sont dans la seconde position et les deux connecteurs (11, 12) sont connectés aux éléments de montage.

3. Siège d'enfant pour véhicule (3) selon la revendication 2, **caractérisé en ce que** le bouton d'actionnement (28) et le bouton d'alerte (29) peuvent coulisser conjointement dans une direction allant dans la seconde tige (7) pour faire pivoter les leviers (22) de la seconde position à la première position pour déverrouiller conjointement les connecteurs (11, 12).
